# FASCICULE DE BREVET EUROPEEN

(11) **EP 2 022 695 B1**
(45) Date de publication et mention de la délivrance du brevet: **29.10.2014**
(21) Numéro de dépôt: 08161270.7
(22) Date de dépôt: 28.07.2008
(51) Int. Cl.: B60W 50/02, B60R 16/03

(54) **Sous-ensemble électrique de véhicule automobile, véhicule et procédé associés**
Elektrisches Modul eines Kraftfahrzeugs sowie zugehöriges Kraftfahrzeug und Verfahren
Electrical subassembly of an automobile, associated vehicle and method.

(30) Priorité: 01.08.2007 FR 0756871
(43) Date de publication de la demande: 11.02.2009
(73) Titulaire: Faurecia Bloc Avant, 92000 Nanterre (FR)
(72) Inventeur: Aubry, Jean-Marcel, 90140 Bourogne (FR)
(74) Mandataire: Blot, Philippe Robert Emile

(56) Documents cités:
- EP-A- 0 968 884
- DE-A1- 4 401 785
- US-A- 5 832 397

## Description

La présente invention concerne un sous-ensemble électrique d'un véhicule automobile, du type comprenant :
- une pluralité de composants fonctionnels du véhicule, activables entre un état inactif et un état actif par un signal d'activation électrique ;
- pour chaque composant, une unité de commande, apte à engendrer un signal d'activation du composant ;
- au moins un cheminement électrique raccordant chaque composant à son unité de commande associée pour transmettre le signal d'activation ; et
- une unité de diagnostic d'un défaut électrique, apte à détecter un défaut électrique présent sur chaque composant et/ou sur le ou chaque cheminement électrique, et apte à transmettre une information de diagnostic à l'unité de commande associée, l'unité de diagnostic étant commune à la pluralité de composants.

On connaît du document EP-A-1 298 009, un sous-ensemble électrique de véhicule automobile comprenant une pluralité de composants fonctionnels d'un projecteur, activables par un signal d'activation. Ce sous-ensemble comprend une unité de commande et des cheminements électriques reliant chaque composant à l'unité de commande.

Pour vérifier le fonctionnement de chaque composant fonctionnel du projecteur, le sous-ensemble comprend une unité de diagnostic raccordée à des capteurs présents sur le connecteur. L'unité de diagnostic est apte à détecter un défaut électrique à l'aide des capteurs et à transmettre une information de diagnostic à l'unité de commande associée.

Toutefois, l'unité de diagnostic électrique est très éloignée de chaque composant, ce qui nécessite une pluralité de lignes de diagnostic pour raccorder l'unité de diagnostic à chaque composant et une pluralité de lignes électriques pour raccorder l'unité de diagnostic à chaque unité de commande.

La structure du câblage d'un tel sous-ensemble électrique est donc fastidieuse à réaliser et relativement encombrante.

Un but de l'invention est donc d'obtenir un sous-ensemble électrique comprenant une pluralité de composants et une unité de diagnostic, le sous-ensemble présentant une structure simple et sans redondance.

A cet effet, l'invention a pour objet un sous-ensemble électrique tel que revendiqué à la revendication 1.

Le sous-ensemble selon l'invention peut comprendre l'une ou plusieurs des caractéristiques suivantes, prise(s) isolément ou suivant toute(s) combinaison(s) techniquement possible(s) :
- l'unité de diagnostic d'un défaut électrique comprend des moyens de détection d'un court-circuit, d'un circuit ouvert ou d'une fuite de courant présents sur chaque composant et/ou sur le ou chaque cheminement électrique ;
- l'unité de diagnostic d'un défaut électrique comprend des moyens de pilotage d'urgence de chaque composant aptes à couper sélectivement l'alimentation électrique de chaque composant lorsqu'un défaut électrique présent sur un composant et/ou sur le ou chaque cheminement électrique est détecté par l'unité de diagnostic, la coupure étant obtenue sans intervention de l'unité de commande du ou de chaque composant ;
- les cheminements électriques raccordant chaque composant à leur unité de commande forment :
- un réseau aval raccordant entre eux la pluralité de composants fonctionnels ;
- un réseau amont raccordant entre elles les unités de commande de chaque composant fonctionnel ; et
- un tronçon commun reliant électriquement le réseau amont au réseau aval, l'unité de diagnostic commune étant interposée sur le tronçon commun ;
- le réseau aval est destiné à être porté par l'un du bloc avant ou du bloc arrière d'un véhicule automobile, le réseau amont étant destiné à être porté par une structure porteuse centrale du véhicule automobile, le sous-ensemble comprenant un moyen de connexion, placé sur le tronçon commun entre le réseau aval et le réseau amont ;
- le moyen de connexion est formé par l'unité de diagnostic ; et
- l'unité de diagnostic comprend des moyens de conversion analogique/numérique raccordés numériquement à au moins une unité de commande et raccordés analogiquement à au moins un composant fonctionnel.

L'invention a également pour objet un véhicule automobile caractérisé en ce qu'il comprend :
- une structure porteuse centrale ;
- un bloc avant ou arrière de support d'équipement, rapporté sur la structure centrale ; et
- un sous-ensemble électrique tel que défini précédemment, la pluralité de composants fonctionnels et l'unité commune de diagnostic d'un défaut électrique étant portés par le bloc avant ou arrière, la ou chaque unité de commande étant portée par la structure porteuse centrale.

L'invention a en outre pour objet un procédé de pilotage d'une pluralité de composants fonctionnels d'un véhicule automobile, dans un sous-ensemble électrique tel que défini précédemment, **caractérisé en ce qu**'il comprend :
- au moins une phase d'activation d'au moins un composant fonctionnel comportant les étapes suivantes :
   - génération d'un signal d'activation du composant à l'aide de l'unité de commande ;
   - transmission du signal d'activation au composant par l'intermédiaire du cheminement électrique ;
   - passage du composant de son état inactif à son état actif ;
- au moins une phase de diagnostic d'un défaut électrique sur le composant et/ou sur le cheminement électrique comprenant les étapes suivantes :
   - détection d'un défaut électrique présent sur le composant et/ou sur le cheminement électrique par l'unité de diagnostic, sans intervention de l'unité de commande ;
   - génération d'une information de diagnostic par l'unité de diagnostic ; et
   - transmission de l'information de diagnostic à l'unité de commande associée au composant détecté.

L'invention sera mieux comprise à la lecture de la description qui va suivre, donnée uniquement à titre d'exemple, et faite en se référant aux dessins annexés, sur lesquels :
- la figure 1 est une représentation schématique, en vue de dessus, de la partie avant d'un véhicule automobile, comprenant un sous ensemble électrique selon l'invention ; et
- la figure 2 est une vue similaire à celle de la figure 1, pour un second mode de réalisation de l'invention.

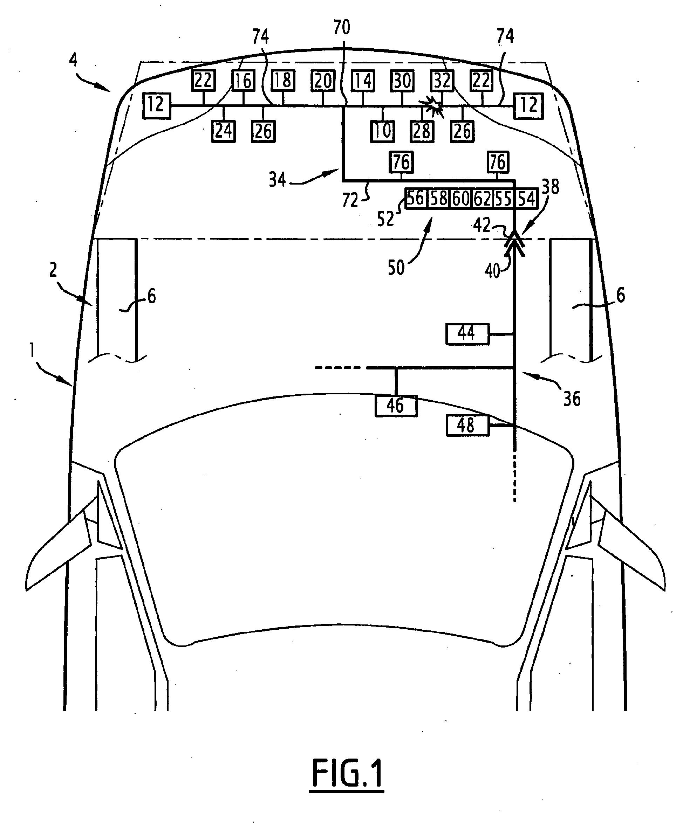

Un sous-ensemble électrique selon l'invention est placé dans un véhicule automobile 1 représenté sur la Figure 1.

Le véhicule automobile 1 représenté sur la figure 1 comporte, entre autres, une structure rigide porteuse centrale 2 et un bloc avant 4 rapporté d'une pièce sur la structure porteuse 2.

La structure porteuse 2 comprend notamment des longerons 6 s'étendant longitudinalement, l'un à droite et l'autre à gauche du véhicule.

La face avant 4 est rigidement fixée à des extrémités avant des longerons 6. La face avant 4 est symbolisée ici par un trapèze dessiné en trait mixte. La face avant 4 comprend typiquement un cadre rigide (non représenté), et une pluralité d'équipements rigidement fixés sur le cadre. Parmi ces équipements, figurent notamment le radiateur du véhicule et un ou plusieurs des composants électriques suivants : un groupe motoventilateur 10 apte à créer une convexion forcée d'air au contact du radiateur, les projecteurs avant 12, un ou plusieurs capteurs de place disponible 14, un ou plusieurs capteurs d'aide au stationnement 16, un capteur de température ambiante 18, un radar 20 apte à détecter les obstacles à l'avant du véhicule, des feux anti-brouillard 22, un klaxon 24, des volets motorisés 26 déplaçables en vue de gérer la ventilation de l'habitacle du véhicule, une ou plusieurs pompes 28 prévues pour projeter un liquide de nettoyage de la glace extérieure des projecteurs, un capteur de vitesse 30 faisant partie du dispositif de régulation de la vitesse du véhicule (cruise control), des capteurs de coussin gonflable 32, etc ...

L'ensemble des équipements ci-dessus définit une pluralité de composants fonctionnels du sous ensemble, activables entre un état inactif et un état actif par un signal d'activation électrique.

La face avant comprend également un faisceau 34 d'alimentation électrique et de commande des composants électriques énumérés ci-dessus.

Cet ensemble est généralement monté sur le cadre du bloc avant dans l'atelier du fournisseur du bloc, puis le bloc avant avec les équipements prémontés est rapporté à l'avant du véhicule sur la structure de celui-ci. De même, le faisceau 34 est monté sur le cadre et raccordé aux différents composants électriques dans l'atelier du fournisseur, puis, une fois le bloc avant rapporté sur la structure du véhicule, le faisceau 34 est raccordé au réseau 36 d'alimentation électrique et de commande du véhicule. Le réseau 36 est porté par la structure porteuse 2.

A cette fin, le bloc avant 4 comporte des moyens 38 de connexion aptes à relier électriquement le faisceau 34 au réseau 36 en un point de connexion unique.

Dans le mode de réalisation de la figure 1, les moyens 38 sont constitués d'un connecteur électrique comportant un élément mâle 40 relié électriquement au réseau du véhicule, et un élément femelle 42, conjugué de l'élément mâle 40, relié électriquement au faisceau 34.

L'élément mâle 40 du connecteur comporte plusieurs contacts mâles, chacun relié à un conducteur électrique du réseau 36. Ces conducteurs électriques sont soit des conducteurs d'amenée de puissance, soit des conducteurs de transfert de commande. Les conducteurs d'amenée de puissance sont reliés aux organes 44 générateurs de puissance du véhicule, par exemple à la batterie ou à l'alternateur. Les conducteurs de commande véhiculent des informations analogiques ou numériques de commande des composants électriques du bloc avant. Ils sont reliés aux différentes unités de commande 46, 48 du véhicule. Ces unités 46, 48 sont portées par la structure rigide centrale 2.

Les unités de commande 46, 48 sont aptes à engendrer un signal d'activation de chaque composant fonctionnel, ce signal étant transmissible à chaque compostant par l'intermédiaire d'un ensemble de cheminements électriques formés par le réseau 36 et le faisceau 34.

Chaque composant fonctionnel 10 à 32 est donc relié électriquement à une unité associée 46 ,48 par un cheminement électrique formant une partie du réseau 36 et du faisceau 34.

L'élément femelle 42 comprend plusieurs contacts femelles, chaque contact femelle étant électriquement en contact avec un des contacts mâles quand l'élément mâle est engagé dans l'élément femelle. Chaque contact femelle est par ailleurs connecté électriquement à un conducteur électrique du faisceau 34. Le faisceau 34 comprend une pluralité de conducteurs électriques de puissance, amenant la puissance électrique depuis le connecteur 38 jusqu'aux différents composants électriques. Le faisceau 34 comprend également des conducteurs de commande, transmettant des informations de commande aux composants électriques. Certains composants, comme par exemple le klaxon 24, sont reliés seulement à des conducteurs de puissance. D'autres composants, par exemple le radar 20, sont reliés à la fois à des conducteurs de puissance et à des conducteurs de commande.

Ainsi, chaque conducteur de commande du faisceau 34 est électriquement relié par l'intermédiaire d'un contact mâle et d'un contact femelle à un conducteur de commande du réseau 36. De même, chaque conducteur de puissance du faisceau 34 est relié par l'intermédiaire d'un contact mâle et d'un contact femelle à un conducteur de puissance du réseau 36.

Le raccordement électrique du faisceau 34 au réseau 36 est extrêmement simple. Une fois le bloc avant 4 rapporté sur la structure porteuse du véhicule, il suffit d'engager l'élément mâle 40 du connecteur électrique dans l'élément femelle 42. Une fois la connexion réalisée, chacun des composants électriques 10 à 32 est relié électriquement au réseau du véhicule.

Selon l'invention, le sous-ensemble électrique comprend un boîtier électronique 50 de diagnostic d'au moins un défaut électrique. Le boîtier 50 comporte des moyens 52 de détection/supervision électrique du bloc avant, et, optionnellement, des moyens 54 de conversion analogique/numérique et des moyens 55 de multiplexage/démultiplexage.

Le boîtier 50 de diagnostic est commun à la pluralité de composants 10 à 32. A cet effet, il est interposé sur un tronçon du faisceau électrique 34 commun à l'ensemble des cheminements électriques raccordant chaque composant 10 à 32 à son unité de commande 46, 48. Le boîtier 50 est monté sur la face avant 4 au voisinage des composants 10 à 32.

Les moyens de supervision 52 comprennent :
- des moyens 56 pour identifier, parmi tous les composants électriques 10 à 32 du bloc avant, ceux qui sont opérationnels et ceux qui sont défaillants ;
- des moyens 58 pour identifier, pour chaque composant électrique défaillant, un type de défaillance ;
- des moyens 60 pour informer, pour certains composants électriques défaillants, l'unité de commande qui gère ledit composant défaillant du type de défaillance identifié ;
- des moyens 62 de pilotage d'urgence pour sélectivement couper l'alimentation électrique de chaque composant électrique défaillant, en fonction au moins du type de défaillance identifié pour ledit composant électrique, et d'un paramètre représentatif de l'état du véhicule.

Les moyens 56 identifient les composants défaillants notamment en analysant l'évolution dans le temps de l'intensité et de la tension du courant fourni à chaque composant.

Pour chaque composant électrique, les moyens 58 identifient la défaillance dans une liste prédéterminée. Cette liste peut être commune à tous les composants, ou être spécifique à chaque composant. Elle peut être partiellement commune à tous les composants. Par exemple, la liste peut comprendre les items suivants : composants totalement défaillants, composants partiellement défaillants, court-circuit, surcharge, surtension, etc ....

Comme indiqué plus haut, certains composants électriques du bloc avant sont associés à des unités de commande faisant partie du réseau électrique du véhicule 36. On trouve par exemple parmi ces composants le groupe motoventilateur 10, les capteurs de place 14, les capteurs d'aide au stationnement 16, le radar 20, les volets 26, le capteur de vitesse 30, et les capteurs de coussin gonflable 32. Chacun de ces composants communique avec l'unité de commande correspondante par l'intermédiaire du réseau 36 et du faisceau 34. L'unité de commande gère les composants électriques qui lui sont associés. En fonction des commandes des passagers du véhicule, et des informations disponibles concernant le fonctionnement du véhicule, l'unité de commande commande la mise en service, l'arrêt, ou la modification du fonctionnement du composant, selon les circonstances.

Les moyens 60, quand ils détectent qu'un tel composant est défaillant, communiquent à l'unité de commande correspondante, l'identité du composant et la nature de la défaillance. En retour, l'unité de commande peut renvoyer un ordre concernant cet équipement, ou concernant tout autre composant du bloc avant piloté par ladite unité de contrôle.

Parallèlement à cela, les moyens 62 sont susceptibles de couper l'alimentation électrique de chaque composant électrique défaillant. A cette fin, les moyens 62 reçoivent d'une des unités de commande électrique du véhicule un paramètre représentatif de l'état du véhicule, spécialement élaboré dans ce but. Typiquement, ce paramètre indique si le véhicule est en état de rouler ou non. En effet, en cas de choc à l'avant du véhicule, les fonctions à préserver ne sont pas les mêmes selon que le véhicule est apte à rouler ou est immobilisé. Ainsi, si le véhicule est apte à rouler, il est important que les fonctions assurant une bonne visibilité au conducteur (projecteurs) ou contribuant à la sécurité du véhicule (capteurs de coussin gonflable, capteurs de vitesse pour le contrôle automatique de la vitesse du véhicule, ...) soient préservées. Au contraire, d'autres fonctions peuvent être coupées, telles que l'alimentation électrique des pompes pour le nettoyage des glaces des projecteurs, le pilotage des volets d'aération de l'habitacle, ....

Au cas où le véhicule est immobilisé, un nombre plus faible de fonctions doit rester opérationnel, essentiellement les fonctions de signalisation (projecteurs, klaxons, ...).

Ainsi, en fonction du paramètre représentatif de l'état du véhicule, de la liste des composants défaillants, et du type de défaillance identifié pour chaque composant défaillant, les moyens 62 vont couper ou non l'alimentation électrique de chaque composant. Pour cela, les moyens 62 utilisent des arbres de décision prédéterminés.

Toutefois, les moyens 62 du boîtier 50 ne sont pas aptes à piloter chaque composant fonctionnel en fonctionnement normal, par exemple lors du démarrage du véhicule. Ce pilotage en fonctionnement normal, lorsque le composant n'est pas défaillant est assuré par l'unité de commande 46, 48 portée par la structure porteuse 2 associée au composant 10 à 32, par l'envoi d'un signal d'activation à travers le cheminement électrique raccordant l'unité 46, 48 au composant 10 à 32.

Dans un mode de réalisation, au moins une partie des composants électriques du bloc avant peut être commandée de manière numérique par les unités de commande qui leur sont associées. Ainsi, le réseau 36 comprend des conducteurs de puissance, des conducteurs de commande dédiés à la transmission d'informations de commande analogiques, et des conducteurs de commande dédiés à la transmission d'informations de commande numériques. Les différents conducteurs de commande sont électriquement reliés au boîtier 50. En revanche, le faisceau 34 ne comprend que des conducteurs de puissance, et des conducteurs de commande analogiques. Au niveau du boîtier 50, les conducteurs de commande analogiques du réseau 36 sont directement reliés aux conducteurs analogiques correspondants du faisceau 34. Les conducteurs de commande numériques du réseau 36 sont reliés aux moyens 54 de conversion numérique/analogique, ces moyens étant aptes à convertir les signaux de commande numériques reçus des conducteurs de commande numériques du réseau 36 en des signaux de commande analogiques diffusés sur les conducteurs de commande analogiques du faisceau 34. Inversement, le boîtier 50 envoie les informations relatives aux composants défaillants vers les unités électroniques de commande correspondantes soit sous forme d'informations analogiques, soit sous forme d'informations numériques, selon les cas. Si ces informations sont envoyées sous forme numérique, elles sont converties d'analogique en numérique par les moyens 54.

En variante, les informations numériques échangées entre le boîtier 50 et les différentes unités de commande électroniques sont échangées sous forme multiplexées. Dans ce cas, le réseau 36 ne comporte typiquement qu'une seule entrée numérique au niveau du boîtier 50. Le boîtier 50 comporte alors des moyens 55 aptes à démultiplexer le signal numérique multiplexé reçu du réseau 36, et à multiplexer le signal numérique diffusé sur le réseau du véhicule par le boîtier 50.

Dans tous les cas, les informations de commande sont transmises à partir du boîtier 50 vers les différents composants électriques du bloc avant sous forme analogique via le faisceau 34.

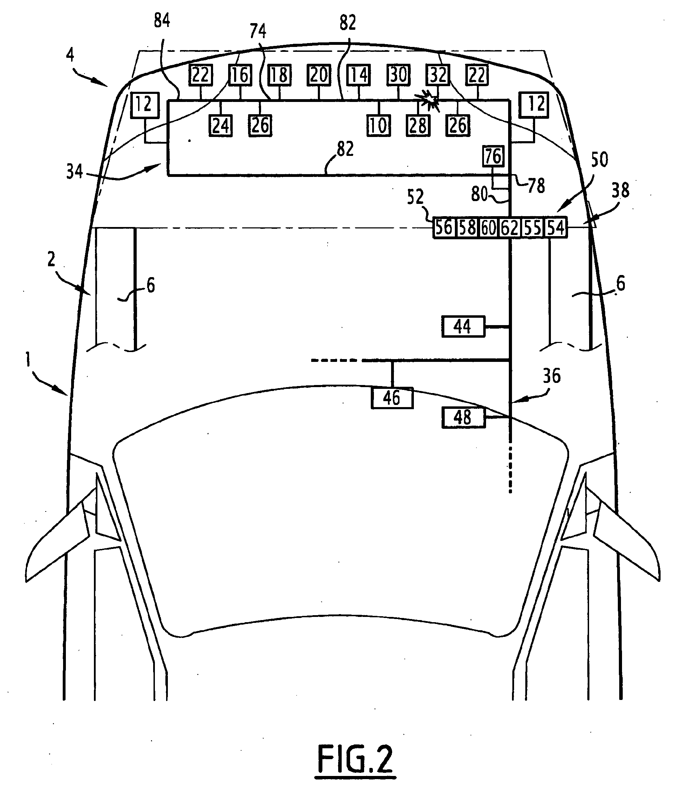

Dans la variante représentée sur la Figure 2, les moyens de connexion sont formés par le boîtier 50 qui est raccordé d'une part, au faisceau 34 et d'autre part, au réseau 36 lors du montage du bloc avant 4.

Selon un second aspect de l'invention, indépendant du premier, le faisceau 34 peut présenter différentes architectures.

Dans une première architecture non préférée, qui n'est pas représentée sur les figures 1 et 2, le faisceau 34 ne comporte qu'une seule branche. Tous les composants électriques sont raccordés successivement, les uns après les autres, sur le faisceau 34 à partir des moyens de connexion 38. Avec une telle architecture, si le faisceau est coupé en un point, tous les équipements situés en aval de la coupure ne sont plus alimentés. On entend ici par être situés en aval, le fait d'être situés, le long du faisceau, plus loin des moyens de connexion 38 que la coupure.

Le faisceau 34 peut également présenter une architecture dite en T, représentée sur la figure 1. Le faisceau 34 comporte un noeud 70, un tronc commun 72 reliant le noeud 70 aux moyens de connexion 38, et deux branches 74 s'étendant à partir du noeud 70. Certains composants électriques sont reliés à l'une des branches 74, d'autres composants étant reliés électriquement à l'autre branche 74. En variante, certains composants 76 peuvent être reliés électriquement au tronc commun 72, entre le noeud 70 et les moyens de connexion 38. Ainsi, s'il se produit une coupure du faisceau (matérialisée par un symbole étoilé sur la figure 1) sur l'une des branches 74, les composants électriques raccordés à l'autre branche 74 restent opérationnels. De même, des composants électriques situés sur la branche coupée, en amont de la coupure, c'est-à-dire entre le noeud 70 et le point de coupure, restent également opérationnels.

Le boîtier de commande 50 est interposé sur le tronc commun 72.

Selon un troisième mode de réalisation représenté sur la figure 2, le faisceau 34 présente une architecture en boucle. Dans cette architecture, le faisceau possède un noeud 78, un tronc commun 80 reliant le noeud 78 aux moyens de connexion 38, deux branches 82 s'étendant à partir du noeud 78, les deux branches 82 étant connectées l'une à l'autre par un second noeud 84. Ainsi, les deux branches 82 forment une boucle passant par les noeuds 78 et 84. Au moins certains des composants électriques sont reliés électriquement au noeud 78 à travers les deux branches 82 à la fois. De préférence, tous les composants électriques sont reliés au noeud 78 à travers les deux branches 82. Avec cette architecture en boucle, quand il se produit une coupure du faisceau électrique au niveau d'une des branches 82, tous les composants électriques restent opérationnels. En effet, les composants électriques situés en amont de la coupure sur la branche coupée 82 restent reliés aux moyens de connexion 38 par ladite branche coupée 82. Les composants électriques situés en aval de la coupure sur la branche coupée 82 sont connectés électriquement à l'autre branche 82 via le noeud 84, et sont donc reliés électriquement aux moyens de connexion 38 par la branche 82 non coupée.

Le bloc avant ou arrière décrit ci-dessus présente de multiples avantages.

Du fait qu'il comporte un unique moyen de connexion apte à relier électriquement le faisceau du bloc au réseau du véhicule, tous les composants électriques du bloc étant électriquement reliés aux moyens de connexion par l'intermédiaire du faisceau, le montage du bloc sur le véhicule est considérablement simplifié. Après avoir rapporté le bloc sur la structure porteuse du véhicule, il suffit de connecter le faisceau au réseau du véhicule par le moyen de connexion unique.

Le moyen de connexion peut avantageusement être un connecteur électrique, auquel cas il suffit d'engager l'élément mâle du connecteur dans l'élément femelle conjugué pour réaliser la connexion. La connexion est donc particulièrement simple et rapide.

Les moyens de connexion peuvent également comprendre un boîtier électronique assurant la supervision électrique des composants du bloc. Ceci permet de simplifier considérablement l'architecture électrique du véhicule. Ce boîtier peut comprendre notamment des moyens pour identifier les composants défaillants, des moyens pour identifier le type de défaillance desdits composants défaillants, et des moyens pour informer l'unité de commande correspondante de la défaillance du composant et de la nature de la défaillance. Ces fonctions, dans l'état de la technique, étaient réparties entre les différentes unités de commande du véhicule. Le fait de les rassembler au niveau du boîtier 50 permet de simplifier l'architecture électrique du véhicule.

Par ailleurs, le boîtier 50 peut également comprendre des moyens pour couper l'alimentation électrique des composants défaillants, en fonction de la nature de la défaillance et en fonction de l'état du véhicule. Ainsi, selon que le véhicule est en état de rouler ou non, certaines fonctions sont préservées ou non. Ceci permet de mettre à l'arrêt des composants électriques dont le fonctionnement pourrait créer des situations dangereuses, et qui ne sont pas indispensables compte tenu de l'état du véhicule. La sûreté de fonctionnement du véhicule en est améliorée.

De manière avantageuse, le boîtier 50 peut servir à loger des moyens de conversion analogiques/numériques de manière à convertir des signaux de commande numériques reçus des différentes unités de commande du véhicule en signaux de commande analogiques reliés vers les composants électriques du bloc. Ceci permet de simplifier encore l'architecture électrique du véhicule.

De manière à limiter le nombre de conducteurs du réseau électrique du véhicule, le boîtier 50 peut comporter des moyens de multiplexage/démultiplexage aptes à démultiplexer les signaux reçus du réseau du véhicule, ou à multiplexer les signaux diffusés vers le réseau du véhicule.

Le faisceau peut avantageusement présenter une architecture en T, ce qui permet, en cas de coupure du faisceau dans l'une des branches du T, de préserver intégralement le fonctionnement des composants raccordés électriquement à l'autre branche du T.

L'architecture en boucle, quant à elle, permet de préserver le fonctionnement de tous les composants électriques, même quand le faisceau est coupé en un point.

Le bloc décrit ci-dessus peut présenter de multiples variantes.

L'invention a été décrite relativement à un bloc avant susceptible d'être rapporté à l'avant du véhicule. Elle est toutefois applicable également à un bloc arrière, susceptible d'être rapporté d'une pièce à l'arrière du véhicule. Le bloc arrière correspond typiquement au pare-chocs arrière du véhicule. Il porte des composants électriques tels que l'éclairage de la plaque d'immatriculation arrière ou un radar d'aide au stationnement. Il peut également comporter des organes de gestion de l'échappement du véhicule automobile. Le bloc arrière est typiquement rapporté sur les extrémités arrière des longerons du véhicule.

Dans le mode de réalisation où le faisceau présente une architecture en T, le faisceau peut comprendre plus de deux branches, par exemple trois, quatre, ou même plus de quatre branches. Toutes les branches peuvent être raccordées au même noeud. En variante, les branches peuvent être raccordées à différents noeuds répartis le long du tronc commun du faisceau. En variante également, chaque branche peut se subdiviser en plusieurs sous-branches, s'étendant à partir d'un ou plusieurs noeuds répartis le long de ladite branche.

Dans le cas où le faisceau présente une architecture en boucle, le faisceau peut comporter plusieurs boucles s'étendant à partir d'un même noeud, ou s'étendant à partir de plusieurs noeuds répartis le long du tronc commun. Certaines boucles peuvent également être reliées à des noeuds disposés dans une autre boucle. Le faisceau peut en outre comporter une ou plusieurs branches s'étendant à partir de noeuds situés soit dans le tronc commun soit dans une ou plusieurs boucles.

Dans le cas où les moyens de connexion du faisceau au réseau du véhicule sont un connecteur, l'élément mâle peut être relié au faisceau et l'élément femelle au réseau du véhicule.

La gestion de la diversité des équipements des blocs avant et arrière selon les versions d'un même modèle de véhicules est facilitée. En effet, les versions d'entrée de gamme et de haut de gamme ne reçoivent pas les mêmes équipements. Le bloc avant décrit ci-dessus, dans le mode de réalisation comportant un boîtier électronique 50 de connexion du faisceau sur le réseau du véhicule, permet d'utiliser le même réseau d'alimentation électrique et de commande pour toutes les versions du véhicule. En revanche, le boîtier 50, le faisceau et les composants électriques du bloc avant varient d'une version à une autre. Les logiciels chargés dans les différentes unités de commande électroniques du véhicule peuvent être différents selon les versions.

Il est par ailleurs possible de faire évoluer facilement les équipements du bloc avant ou arrière au cours de la vie du véhicule, sans modifier l'architecture du réseau d'alimentation électrique et de commande du véhicule. On entend ici par évolution le fait d'ajouter un composant, de le retirer, de le remplacer par un modèle différent, de le remplacer par type de composant différent, etc. A cette fin, le boîtier électronique 50 peut présenter, côté faisceau du bloc, une ou plusieurs entrées en attente. Comme précédemment, il peut être nécessaire de modifier les logiciels chargés dans les unités de commande électroniques du véhicule, sans modifier le réseau lui-même.

## Revendications

1. Sous-ensemble électrique d'un véhicule automobile (1), du type comprenant :
- une pluralité de composants fonctionnels (10 à 32) du véhicule, activables entre un état inactif et un état actif par un signal d'activation électrique ;
- pour chaque composant (10 à 32), une unité (46, 48) de commande, apte à engendrer un signal d'activation du composant ;
- au moins un cheminement électrique (34, 38, 36) raccordant chaque composant (10 à 32) à son unité de commande associée (46, 48) pour transmettre le signal d'activation ; et
- une unité (50) de diagnostic d'un défaut électrique,
**caractérisé en ce que** l'unité de diagnostic (50) est placée sur le ou chaque cheminement électrique (34, 36, 38), entre chaque composant (10 à 32) et son unité de commande associée (46, 48) en étant déportée à l'écart de l'unité de commande (46, 48), au voisinage de chaque composant (10 à 32) ;
et **en ce que** l'unité de diagnostic est apte à détecter un défaut électrique présent sur chaque composant (10 à 32) et/ou sur le ou chaque cheminement électrique (34, 36, 38), et est apte à transmettre une information de diagnostic à l'unité de commande associée (46, 48), l'unité de diagnostic étant commune à la pluralité de composants (50).

2. Sous-ensemble selon la revendication 1, **caractérisé en ce que** l'unité de diagnostic (50) d'un défaut électrique comprend des moyens (52) de détection d'un court-circuit, d'un circuit ouvert ou d'une fuite de courant présents sur chaque composant (10 à 32) et/ou sur le ou chaque cheminement électrique (34, 36, 38).

3. Sous-ensemble selon l'une des revendications 1 ou 2, **caractérisé en ce que** l'unité de diagnostic (50) d'un défaut électrique comprend des moyens (62) de pilotage d'urgence de chaque composant (10 à 32) aptes à couper sélectivement l'alimentation électrique de chaque composant (10 à 32) lorsqu'un défaut électrique présent sur un composant (10 à 32) et/ou sur le ou chaque cheminement électrique (34, 36, 38) est détecté par l'unité de diagnostic (50), la coupure étant obtenue sans intervention de l'unité de commande (46, 48) du ou de chaque composant (10 à 32).

4. Sous-ensemble selon l'une quelconque des revendications précédentes, **caractérisé en ce que** les cheminements électriques (34, 36, 38) raccordant chaque composant (10 à 32) à leur unité de commande (46, 48) forment :
- un réseau aval (74) raccordant entre eux la pluralité de composants fonctionnels (10 à 32);
- un réseau amont (36) raccordant entre elles les unités de commande (46, 48) de chaque composant fonctionnel ; et
- un tronçon commun (72; 80) reliant électriquement le réseau amont (36) au réseau aval (74), l'unité de diagnostic (50) commune étant interposée sur le tronçon commun (72; 80).

5. Sous-ensemble selon la revendication 4, **caractérisé en ce que** le réseau aval (74) est destiné à être porté par l'un du bloc avant (4) ou du bloc arrière d'un véhicule automobile (1), le réseau amont (36) étant destiné à être porté par une structure porteuse centrale (2) du véhicule automobile (1), le sous-ensemble (1A) comprenant un moyen de connexion (40, 42 ; 50), placé sur le tronçon commun (72) entre le réseau aval (74) et le réseau amont (36).

6. Sous-ensemble selon la revendication 5, **caractérisé en ce que** le moyen de connexion est formé par l'unité de diagnostic (50).

7. Sous-ensemble selon l'une quelconque des revendications précédentes, **caractérisé en ce que** l'unité de diagnostic (50) comprend des moyens (54) de conversion analogique/numérique raccordés numériquement à au moins une unité de commande (46, 48) et raccordés analogiquement à au moins un composant fonctionnel (10 à 32).

8. Véhicule automobile (1), **caractérisé en ce qu'**il comprend :
- une structure porteuse centrale (2) ;
- un bloc avant (4) ou arrière de support d'équipement, rapporté sur la structure centrale (2) ; et
- un sous-ensemble électrique selon l'une quelconque des revendications précédentes, la pluralité de composants fonctionnels (10 à 32) et l'unité commune (50) de diagnostic d'un défaut électrique étant portés par le bloc avant (4) ou arrière, la ou chaque unité de commande (46, 48) étant portée par la structure porteuse centrale (2).

9. Procédé de pilotage d'une pluralité de composants fonctionnels (10 à 32) d'un véhicule automobile, dans un sous-ensemble électrique selon l'une quelconque des revendications 1 à 7, **caractérisé en ce qu'**il comprend
- au moins une phase d'activation d'au moins un desdits composants fonctionnels (10 à 32) comportant les étapes suivantes :
• génération d'un signal d'activation du composant (10 à 32) à l'aide de l'unité de commande (46, 48) ;
• transmission du signal d'activation au composant (10 à 32) par l'intermédiaire du cheminement électrique (34, 36, 38) ;
• passage du composant (10 à 32) de son état inactif à son état actif ;
- au moins une phase de diagnostic d'un défaut électrique sur le composant (10 à 32) et/ou sur le cheminement électrique (34, 36, 38) comprenant les étapes suivantes :
• détection d'un défaut électrique présent sur le composant (10 à 32) et/ou sur le cheminement électrique (34, 36, 38) par l'unité de diagnostic (50), sans intervention de l'unité de commande (46, 48) ;
• génération d'une information de diagnostic par l'unité de diagnostic (50) ; et
• transmission de l'information de diagnostic à l'unité de commande (46, 48) associée au composant (10 à 32) détecté.

## Patentansprüche

1. Elektrische Unterbaugruppe eines Kraftfahrzeugs (1) der Art, die umfasst:
- eine Mehrzahl von Funktionskomponente (10 bis 32) des Fahrzeugs, die zwischen einem inaktivem und einem aktiven Zustand durch ein elektrisches Aktivierungssignal aktivierbar sind;
- für jede Komponente (10 bis 32) eine Steuereinheit (46, 48), die geeignet ist, ein Aktivierungssignal der Komponente zu erzeugen;
- mindestens einen elektrischen Pfad (34, 38, 36), der jede Komponente (10 bis 32) an ihre zugeordnete Steuereinheit (46, 48) anschließt, um das Aktivierungssignal zu übertragen; und
- eine Diagnoseeinheit (50) für einen elektrischen Fehler,
**dadurch gekennzeichnet, dass** die Diagnoseeinheit (50) an dem oder jedem elektrischen Pfad (34, 36, 38) zwischen jeder Komponente (10 bis 32) und ihrer zugeordneten Steuereinheit (46, 48) liegt, wobei sie mit Abstand zur Steuereinheit (46, 48) in der Nähe jeder Komponente (10 bis 32) angeordnet ist;
und dass die Diagnoseeinheit geeignet ist, einen an jeder Komponente und/oder an dem oder jedem elektrischen Pfad (34, 36, 38) vorhandenen elektrischen Fehler zu detektieren, und geeignet ist, eine Diagnoseinformation an die zugeordnete Steuereinheit (46, 48) zu übertragen, wobei die Diagnoseeinheit der Mehrzahl von Komponenten (50) gemeinsam ist.

2. Unterbaugruppe nach Anspruch 1, **dadurch gekennzeichnet, dass** die Diagnoseeinheit (50) eines elektrischen Fehlers Mittel (52) zur Erfassung eines Kurzschlusses, eines offenen Kreises oder einer Stromleckage umfasst, die an jeder Komponente (10 bis 32) und/oder an dem oder jedem elektrischen Pfad (34, 36, 38) vorhanden sind.

3. Unterbaugruppe nach einem der Ansprüche 1 oder 2, **dadurch gekennzeichnet, dass** die Diagnoseeinheit (50) für einen elektrischen Fehler Mittel (62) zur Notansteuerung jeder Komponente (10 bis 32) umfasst, die geeignet sind, selektiv die elektrische Versorgung jeder Komponente (10 bis 32) abzuschalten, wenn ein elektrischer Fehler an einer Komponente (10 bis 32) und/oder an dem oder jedem elektrischen Pfad (34, 36, 38) von der Diagnoseeinheit (50) detektiert wird, wobei das Abschalten ohne Intervention der Steuereinheit (46, 48) der oder jeder Komponente (10 bis 32) erhalten wird.

4. Unterbaugruppe nach einem beliebigen der vorhergehenden Ansprüche, **dadurch gekennzeichnet, dass** die elektrischen Pfade (34, 36, 38), die jede Komponente (10 bis 32) mit ihrer Steuereinheit (46, 48) verbinden, bilden:
- ein nachgelagertes Netz (74), das die Mehrzahl von Funktionskomponenten (10 bis 32) untereinander verbindet;
- ein vorgelagertes Netz (36), das die Steuereinheiten (46, 48) jeder Funktionskomponente untereinander verbindet; und
- einen gemeinsamen Leiterabschnitt (72; 80), der elektrisch das vorgelagerte Netz (36) mit dem nachgelagerten Netz (74) verbindet, wobei die gemeinsame Diagnoseeinheit (50) in dem gemeinsamen Leiterabschnitt (72; 80) liegt.

5. Unterbaugruppe nach Anspruch 4, **dadurch gekennzeichnet, dass** das nachgelagerte Netz (74) vorgesehen ist, von einem Vorderteil (4) oder einem Rückteil eines Kraftfahrzeugs (1) getragen zu werden, wobei das vorgelagerte Netz (36) vorgesehen ist, an einer Mittelträgerstruktur (2) des Kraftfahrzeugs (1) gelagert zu werden, wobei die Unterbaugruppe (1A) ein Verbindungsmittel (40, 42; 50) umfasst, das an dem gemeinsamen Leiterabschnitt (72) zwischen dem nachgelagerten Netz (74) und dem vorgelagerten Netz (36) angeordnet ist.

6. Unterbaugruppe nach Anspruch 5, **dadurch gekennzeichnet, dass** das Verbindungsmittel durch die Diagnoseeinheit (50) gebildet wird.

7. Unterbaugruppe nach einem beliebigen der vorhergehenden Ansprüche, **dadurch gekennzeichnet, dass** die Diagnoseeinheit (50) Mittel (54) zur analog/digital Umwandlung umfasst, die digital an mindestens eine Steuereinheit (46, 48) angeschlossen sind und analog an mindestens eine Funktionskomponente (10 bis 32) angeschlossen sind.

8. Kraftfahrzeug (1), **dadurch gekennzeichnet, dass** es umfasst:
- eine Mittelträgerstruktur (2);
- ein Vorderteil (4) oder Rückteil zur Lagerung von Ausrüstung, das an der Mittelstruktur (2) befestigt ist; und
- eine elektrische Unterbaugruppe nach einem beliebigen der vorhergehenden Ansprüche, wobei die Mehrzahl von Funktionskomponenten (10 bis 32) und die gemeinsame Diagnoseeinheit (50) für einen elektrischen Fehler von dem Vorderteil (4) oder Rückteil getragen sind und die oder jede Steuereinheit (46, 48) an der Mittelträgerstruktur (2) gelagert ist.

9. Verfahren zur Steuerung einer Mehrzahl von Funktionskomponenten (10 bis 32) eines Kraftfahrzeugs in einer elektrischen Unterbaugruppe nach einem beliebigen der Ansprüche 1 bis 7, **dadurch gekennzeichnet, dass** es umfasst:
- mindestens eine Aktivierungsphase von mindestens einer der Funktionskomponenten (10 bis 32), die die folgenden Schritte umfasst:
• Erzeugung eines Aktivierungssignals der Komponente (10 bis 32) mit Hilfe der Steuereinheit (46, 48);
• Übertragung des Aktivierungssignals an die Komponente (10 bis 32) über den elektrischen Pfad (34, 36, 38);
• Umschaltung der Komponente (10 bis 32) von ihrem inaktiven Zustand in ihren aktiven Zustand;
- mindestens eine Phase der Diagnose eines elektrischen Fehlers an der Komponente (10 bis 32) und/oder auf dem elektrischen Pfad (34, 36, 38), die folgende Schritte umfasst:
• Detektion eines elektrischen Fehlers, der an der Komponente (10 bis 32) und/oder auf dem elektrischen Pfad (34, 36, 38) vorhanden ist, durch die Diagnoseeinheit (50) ohne Intervention der Steuereinheit (46, 48);
• Erzeugung einer Diagnoseinformation durch die Diagnoseeinheit (50); und
• Übertragung der Diagnoseinformation an die Steuereinheit (46, 48), die der detektierten Komponente (10 bis 32) zugeordnet ist.

## Claims

1. Electrical sub-assembly of an automotive vehicle (1), of the type comprising:
- a plurality of functional components (10 to 32) of the vehicle which can be activated between an inactive state and an active state by an electrical activation signal;
- for each component (10 to 32), a control unit (46, 48) configured to generate a signal for activating the component;
- at least one electrical path (34, 38, 36) connecting each component (10 to 32) to its associated control unit (46, 48) for transmitting the activation signal; and
- a unit (50) for diagnosing an electrical fault,
**characterised in that** the diagnostic unit (50) is positioned on the or each electrical path (34, 36, 38) between each component (10 to 32) and its associated control unit (46, 48), being offset at a distance from the control unit (46, 48) in the vicinity of each component (10 to 32);
and **in that** the diagnostic unit is configured to detect an electrical fault present on each component (10 to 32) and/or on the or each electrical path (34, 36, 38) and is configured to transmit diagnostic information to the associated control unit (46, 48), the diagnostic unit being common to the plurality of components (50).

2. Sub-assembly as claimed in claim 1, **characterised in that** the unit (50) for diagnosing an electrical fault comprises means (52) for detecting a short-circuit, an open circuit or a current leakage present on each component (10 to 32) and/or on the or each electrical path (34, 36, 38).

3. Sub-assembly as claimed in one of claims 1 or 2, **characterised in that** the unit (50) for diagnosing an electrical fault comprises emergency control means (62) for each component (10 to 32) configured to selectively cut off the electrical supply of each component (10 to 32) when an electrical fault present on a component (10 to 32) and/or on the or each electrical path (34, 36, 38) is detected by the diagnostic unit (50), the cut-off being effected without intervention by the control unit (46, 48) of the or each component (10 to 32).

4. Sub-assembly as claimed in any one of the preceding claims, **characterised in that** the electrical paths (34, 36, 38) connecting each component (10 to 32) to its control unit (46, 48) form:
- a downstream network (74) connecting the plurality of functional components (10 to 32) to one another;
- an upstream network (36) connecting the control units (46, 48) of each functional component to one another; and
- a common run (72; 80) electrically connecting the upstream network (36) to the downstream network (74), the common diagnostic unit (50) being interposed on the common run (72; 80).

5. Sub-assembly as claimed in claim 4, **characterised in that** the downstream network (74) is intended to be mounted on one of the front block (4) or rear block of an automotive vehicle (1), the upstream network (36) being intended to be mounted by means of a central support structure (2) of the automotive vehicle (1), the sub-assembly (1A) having a connection means (40, 42; 50) positioned on the common run (72) between the downstream network (74) and the upstream network (36).

6. Sub-assembly as claimed in claim 5, **characterised in that** the connection means is formed by the diagnostic unit (50).

7. Sub-assembly as claimed in any one of the preceding claims, **characterised in that** the diagnostic unit (50) has analogue/digital converter means (54) digitally connected to at least one control unit (46, 48) and connected in analogue to at least one functional component (10 to 32).

8. Automotive vehicle (1), **characterised in that** it comprises:
- a central support structure (2);
- a front (4) or rear block for supporting equipment detachably connected to the central structure (2); and
- an electrical sub-assembly as claimed in any one of the preceding claims, the plurality of functional components (10 to 32) and the common unit (50) for diagnosing an electrical fault being supported by the front (4) or rear block, the or each control unit (46, 48) being supported by the central support structure (2).

9. Method of controlling a plurality of functional components (10 to 32) of an automotive vehicle in an electrical sub-assembly as claimed in any one of claims 1 to 7, **characterised in that** it comprises:
- at least one phase of activating at least one of said functional components (10 to 32) comprising the following steps:
· generating a signal to activate the component (10 to 32) with the aid of the control unit (46, 48);
· transmitting the activation signal to the component (10 to 32) via the electrical path (34, 36, 38);
. switching the component (10 to 32) from its inactive state to its active state;
- at least one phase of diagnosing an electrical fault on the component (10 to 32) and/or on the electrical path (34, 36, 38) comprising the following steps:
· detecting an electrical fault present on the component (10 to 32) and/or on the electrical path (34, 36, 38) by the diagnostic unit (50) without intervention by the control unit (46, 48);
· generating diagnostic information by the diagnostic unit (50);
· transmitting the diagnostic information to the control unit (46, 48) associated with the detected component (10 to 32).
